# EUROPEAN PATENT SPECIFICATION

(11) **EP 4 493 662 B1**
(45) Date of publication and mention of the grant of the patent: **10.06.2026**
(21) Application number: 23705572.8
(22) Date of filing: 21.02.2023
(51) Int. Cl.: C11D 3/20, C11D 3/28, C11D 3/48, A01N 31/16, A01N 43/653, A01P 3/00, C11D 3/04

(54) **AN ANTIFUNGAL COMPOSITION**
ANTIMYKOTISCHE ZUSAMMENSETZUNG
COMPOSITION ANTIFONGIQUE

(30) Priority: 15.03.2022 EP 22162242
(43) Date of publication of application: 22.01.2025
(73) Proprietor: Unilever IP Holdings B.V., 6708 WH Wageningen (NL); Unilever Global IP Limited, Wirral, Merseyside CH62 4ZD (GB)
(72) Inventor: MAHAPATRA, Samiran, 6708 WH Wageningen (NL); MEDEPALLI, Srilaxmi Venkata, 6708 WH Wageningen (NL); MOHAPATRA, Namisha, 6708 WH Wageningen (NL); VARMA, Sandeep, 6708 WH Wageningen (NL)
(74) Representative: Unilever Patent Group
(86) International application number: PCT/EP2023/054265
(87) International publication number: WO 2023/174644

(56) References cited:
- WO-A1-2022/002882
- GB-A- 2 354 771
- US-A1- 2020 360 252
- US-A1- 2021 000 712
- US-A1- 2021 220 243

## Description

### Field of the Invention

The present invention relates to an antifungal composition. It particularly relates to such a composition for cleaning inanimate surfaces like those on clothes, kitchens, bathrooms, toilets and other surfaces in homes, offices and other public places.

### Background of the Invention

Most people prefer to live in areas where the floors, table tops, kitchen surfaces, utensils, bathrooms and toilets are clean and well disinfected. Such surfaces are generally cleaned using compositions that contain surfactants. Certain antimicrobial agents may also be included in such compositions to disinfect the surfaces to make them free of harmful microorganisms like bacteria or virus. People also prefer the fabric that they use like clothes, bedsheets and other upholstery to be clean and smelling good and free of such germs. US 2020/360252 A1 is concerned with personal care products such as a shampoo composition comprising a resorcinol derivative, an anti-fungicide and surfactants. GB 2 354 771 A is concerned with liquid detergents comprising bactericides and surfactants.

The present inventors noticed that compositions known in the art are good in delivering desired anti-bacterial efficacy but lack in delivering antifungal efficacy. A representative fungus which is difficult to inactivate on inanimate surfaces is *Aspergillus Brasiliensis.* The present inventors therefore took it upon themselves to solve the problem of providing high antifungal efficacy with a combination of ingredients that have a history of safe use in personal care products. With in-depth knowledge of mode of action in killing and inactivating microbes and with extensive experimentation in this area they hit upon a surprising finding that a combination of specific alkyl substituted dihydroxy benzene compound with a conazole compound, they are able to deliver the desired synergistic antifungal benefits. They also found that inclusion of a zinc salt into this combination enables inclusion of lowered amounts of the dihydroxy benzene compound and the conazole compound thereby ensuring cost-effective solution to this difficult problem.

It is thus an object of the present invention to provide for an antifungal composition using a combination ingredients that have a history of safe use in personal care products.

It is another object of the present invention to provide for an antifungal composition which is cost effective and works on all types of inanimate surfaces.

### Summary of the Invention

According to the first aspect of the present invention there is provided an antifungal composition comprising
(i) alkyl substituted dihydroxy benzene wherein the alkyl group comprises 2 to 6 carbon atoms;
(ii) a conazole compound;
(iii) a surfactant; and (iv) 0.1 to 2 wt% of zinc salt.

Another aspect of the present invention relates to a method of inhibiting growth of fungus on a surface comprising the step of applying the composition of the first aspect on to the desired surface.

### Detailed Description of the Invention

For the avoidance of doubt, any feature of one aspect of the present invention may be utilised in any other aspect of the invention. The word "comprising" is intended to mean "including" but not necessarily "consisting of" or "composed of". Thus, the term "comprising" is meant not to be limiting to any subsequently stated elements, but rather to optionally also encompass non-specified elements of major or minor functional importance. In other words, the listed steps or options need not be exhaustive. Whenever the words "including" or "having" are used, these terms are meant to be equivalent to "comprising" as defined above. It is noted that the examples given in the description below are intended to clarify the invention and are not intended to limit the invention to those examples per se. Except in the examples, or where otherwise explicitly indicated, all numbers in this description indicating amounts of material or conditions of reaction, physical properties of materials and/or use are to be understood as modified by the word "about". Unless specified otherwise, numerical ranges expressed in the format "x to y" are understood to include x and y. When for a specific feature multiple preferred ranges are described in the format "x to y", it is understood that all ranges combining the different endpoints are also contemplated. Unless specified otherwise, amounts as used herein are expressed in percentage by weight based on total weight of the composition and is abbreviated as "wt%".

Throughout this description, the term disinfection refers to reduction of the number of viable microorganisms in a given medium or on a given surface. Typically, disinfection involves the destruction or inactivation of the microorganisms. Both animate and inanimate media and surfaces are contemplated, although inanimate surfaces are preferred.

The term " antimicrobial " refers to a compound capable of killing, inhibiting the growth of or controlling the growth of microorganisms at a locus; antimicrobials include bactericides, fungicides and algaecides. The term "microorganism" includes, for example, fungi (such as yeast and mould), bacteria and algae. However, since the object of the present invention is to inhibit growth of fungus the term 'antimicrobial especially refers to inhibition or killing of fungus.

The compositions of the present invention are preferred for non-therapeutic use, and more particularly preferred for use in cleaning surfaces, preferably wherein the surface is a hard surface and more preferably for use in cleaning applications such as cleaning kitchen, bathroom and floor surfaces. They may also be used for cleaning fabrics.

The composition of the invention comprises alkyl substituted dihydroxy benzene wherein the alkyl group comprises 2 to 6 carbon atoms.

Alkyl substituted dihydroxy benzene has the general chemical structure as given below:

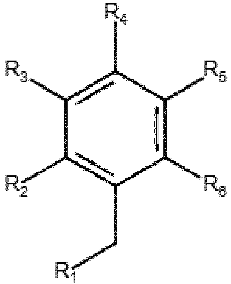

Wherein R₁ is C1 to C5 alkyl group; and each of R₂ to R₆ is either an OH group or H; and wherein two of R₂ to R₆ is OH.

Structure of more preferred alkyl substituted dihydroxy benzene for use in the present invention is

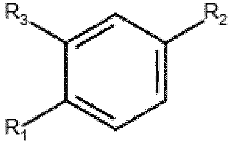

Wherein R₁ is a C₂ to C₆ alkyl group; R₂ and R₃ are OH

Preferably R₁ is an alkyl group comprising 2, 4 or 6 carbon atoms. The two hydroxy groups are generally at the 1 and 3 position. Such compounds are often referred to as substituted resorcinols. Thus, the most preferred compounds are ethyl resorcinol, butyl resorcinol or hexyl resorcinol. The 4-substituted resorcinol is most preferred. Thus the resorcinols which may be used are 4-ethyl resorcinol, 4-butyl resorcinol or 4-hexyl resorcinol. The more preferred compound for use in the present invention is one or both of 4-ethyl resorcinol and 4-hexyl resorcinol, most preferred being 4-ethyl resorcinol (4-ER). 4-ER is also known by its synonyms 4-ethylbenzene-1,3-diol, and 4-ethyl-1,3-benzenediol.

The composition preferably comprises 0.005 to 4%, more preferably from 0.005 to 2%, most preferably from 0.005 to 1% alkyl substituted dihydroxy benzene by weight of the composition.

The composition of the invention comprises a conazole compound. It is preferably chosen from one or both of climbazole or ketoconazole; most preferably it is climbazole.

Climbazole has the chemical structure as below:

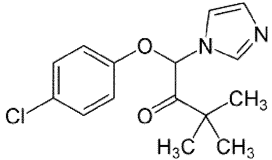

Climbazole is a known antifungal agent that has been used in treating dandruff and eczema. It is especially effective against fungus Malassezia spp. that is believed to play an important role in dandruff. To the knowledge of the present inventors climbazole has not been used in antifungal composition for inanimate surfaces.

The composition preferably comprises 0.01 to 1%, more preferably from 0.01 to 0.5%, conazole compound by weight of the composition.

Without wishing to be bound by theory the inventors believe that the combination of the alkyl substituted dihydoxy benzene compound and the conazole compound works in inhibiting growth of fungus on surfaces by way of inhibiting the fungal melanin which is attributed to the alkyl substituted dihydroxy benzene compound. Fungal melanin is a key virulence factor required for many biological functions and once targeted, the fungal cell wall weakens thereby the fungus becomes susceptible to antimicrobial agents. Conazoles prevent the synthesis of ergosterol, thereby increasing the membrane fluidity and preventing the growth of fungus.

The composition of the invention additionally comprises a zinc salt. Zinc salts include zinc chloride, zinc acetate, zinc sulphate, zinc citrate, zinc glycinate, zinc pyrithione, zinc undecylenate, or zinc ricinoleate. Most preferred zinc salt for inclusion in the composition of the invention are one or both of zinc sulphate and zinc acetate, most preferably zinc acetate. The zinc salt may be included in 0.1 to 2%, preferably from 0.1 to 1% by weight of the composition. The composition of the invention may be delivered in several products as detailed below. The products are all generally of the wash-off type, usually used for cleaning. This is achieved by including therein a surfactant. The surfactants in these types of products are usually one or more of an anionic, a cationic or an amphoteric surfactant.

### Laundry detergent composition:

The composition may be delivered as a laundry detergent composition which in addition to the essential ingredients of the present invention may also include 1 to 80% surfactant. The laundry detergent composition may be delivered in the form of a solid or as a liquid.

The laundry detergent composition in which the present invention may be delivered is preferably in the liquid form. The term liquid may encompass emulsions, suspensions, and compositions having flowable yet stiffer consistency, known as gels or pastes. Pourable liquid detergent compositions preferably have a viscosity of from 200 to 1,500 mPa.s, preferably from 200 to 700 mPa.s. Such compositions generally have an aqueous continuous phase. Preferably, the composition comprises at least 50% wt. water and more preferably at least 70% wt. water. Water is generally present in an amount of 20% to 99.9% preferably from 40% to 80% by weight of the composition.

Liquid laundry detergent compositions generally comprise 1 to 30%, preferably from 2 to 15% by weight of one or more surfactants. The surfactant is generally anionic in nature. Preferred anionic surfactants are of the organic sulfates and sulfonates having alkyl radicals containing from about 8 to about 22 carbon atoms, the term "alkyl" being used to include the alkyl portion of higher acyl radicals. Examples of such materials include alkyl sulfates, alkyl ether sulfates, alkaryl sulfonates, alpha-olefin sulfonates and mixtures thereof. The alkyl radicals preferably contain from 10 to 18 carbon atoms and may be unsaturated. The alkyl ether sulfates may contain from one to ten ethylene oxide or propylene oxide units per molecule, and preferably contain one to three ethylene oxide units per molecule. The counterion for anionic surfactants is generally an alkali metal such as sodium or potassium; or an ammoniacal counterion such as monoethanolamine, (MEA) diethanolamine (DEA) or triethanolamine (TEA). Mixtures of such counterions may also be employed. Sodium and potassium are preferred.

Most preferred surfactants are of the alkylbenzene sulfonates type, particularly linear alkylbenzene sulfonates (LAS) with an alkyl chain length of from 10 to 18 carbon atoms. Some alkyl sulfate surfactant (PAS) may be used, such as non-ethoxylated primary and secondary alkyl sulphates with an alkyl chain length of from 10 to 18.

Preferably, the composition comprises from 5 to 20 wt% non-ionic surfactant based on the total weight of composition. A preferred class of nonionic surfactant for use in the invention includes aliphatic C₈ to C₁₈, more preferably C₁₂ to C₁₅ primary linear alcohol ethoxylates with an average of from 3 to 20, more preferably from 5 to 10 moles of ethylene oxide per mole of alcohol. Preferred non-ionic surfactants are the C16/18 alcohol ethoxylates.

Liquid laundry detergent compositions also generally comprise agents like soil release polymers, hydroptropes, co-surfactants, builders, polymeric thickeners, and shading dyes in addition to the above described ingredients. Soil release polymers (SRP) help to improve the detachment of soils from fabric by modifying the fabric surface during washing.

The SRP structure may also include capping groups to control molecular weight or to alter polymer properties such as surface activity. Preferred SRPs for use in the invention include copolyesters formed by condensation of terephthalic acid ester and diol, preferably 1,2 propanediol, and further comprising an end cap formed from repeat units of alkylene oxide capped with an alkyl group. The SRP, when included, may range from 0.1 to 10%, desirably from 0.3 to 7%, more preferably from 0.5 to 5% by weight of the composition.

A composition of the invention may incorporate non-aqueous carriers such as hydrotropes, cosolvents and phase stabilizers. Such materials are typically low molecular weight, water-soluble or water-miscible organic liquids such as C1 to C5 monohydric alcohols (such as ethanol and nor i-propanol); C2 to C6 diols (such as monopropylene glycol and dipropylene glycol); C3 to C9 triols (such as glycerol); polyethylene glycols having a weight average molecular weight (M_{w}) ranging from about 200 to 600; C1 to C3 alkanolamines such as mono-, di- and triethanolamines; and alkyl aryl sulfonates having up to 3 carbon atoms in the lower alkyl group (such as the sodium and potassium xylene, toluene, ethylbenzene and isopropyl benzene (cumene) sulfonates). Non-aqueous carriers, when included, may be present in an amount ranging from 0.1 to 3%, preferably from 0.5 to 1% by weight of the composition. The preferred hydrotropes are monopropylene glycol and glycerol.

The liquid laundry detergent composition of the invention may contain one or more cosurfactants (such as amphoteric (zwitterionic) and/or cationic surfactants) in addition to the non-soap anionic and/or nonionic detersive surfactants described above. Such cosurfactant, when included, may be present in an amount ranging from 0.1 to 5% by weight of the composition.

The liquid laundry detergent composition may also optionally contain relatively low levels of organic detergent builder or sequestrant material. Examples include the alkali metal citrates, succinates, malonates, carboxymethyl succinates, carboxylates, polycarboxylates aminocarboxylates and polyacetyl carboxylates. If utilized, the organic builder materials may comprise from about 0.5 percent to 20 wt percent, preferably from 1 wt percent to 10 wt percent, of the composition.

When the composition is a liquid laundry detergent composition, it may be diluted with water in ratios like 1:50, 1:100, 1:200 to form the wash liquor.

The solid laundry compositions herein can take a variety of physical solid forms including forms such as powder, granule, ribbon, noodle, paste, tablet, flake, pastille and bar, and preferably the composition is in the form of powder, granule or a bar.

The composition according to the present invention may be made via a variety of conventional methods known in the art including dry-mixing, compaction such as agglomerating, extrusion, tableting, or spray-drying of the various compounds comprised in the detergent component, or combinations of these techniques. The powder or granule compositions preferably have a density of more than 350 grams/litre, more preferably more than 450 grams/litre or even more than 570 grams/litre.

Typical solid laundry detergent compositions comprise one or more of surfactants chosen from anionic, nonionic, zwitterionic, cationic, amphoteric types, preferably it is of the anionic type. These compositions in solid form typically comprise from 1 to 30% by weight anionic surfactants. Details on the various ingredients like the anionic and non-ionic surfactants, the SRPs, hydroptopes, builders etc which are described for the liquid detergent composition may also be included in the solid detergent composition. Additionally, they may also comprise other adjuvents to provide benefits to the fabric being washed e.g. antiredeposition polymers which together may be included in 0 to 5% by weight of the composition. Builders are generally included especially to counteract the ill effects of hardness of water being used to wash the fabric and these account for up to 50% typically 10 to 30% by weight of the composition. Other fabric benefit agents like shading dyes and optical brightener may be included in up to 1% by weight of the composition. Bleaches may sometimes be included and when it is included it accounts for up to 10% by weight of the composition and fillers generally account for up to 40% by weight of the composition.

The solid laundry detergent composition according to the present invention preferably has a pH from 7.0 to 10.5, preferably 7.0 to 10.2, still preferably from 8.5 to 10.2, when measured at 1 wt.% dilution in de-ionised water at 25°C. The composition may preferably include a buffer.

### Fabric conditioning composition

The composition of the invention may also be delivered as a fabric conditioning composition which additionally comprises 1 to 50% of a fabric softening active.

The fabric conditioner composition is also referred to as a fabric softener. Fabric conditioners comprise active materials which soften or condition fabric. Examples of suitable fabric softening actives include: quaternary ammonium compounds, silicone polymers, polysaccharides, clays, amines, fatty esters, dispersible polyolefins, polymer latexes and mixtures thereof. The fabric softening active is preferably selected from a quaternary ammonium compound, or silicone polymer and mixtures thereof, more preferably a quaternary ammonium compound.

The fabric softening compounds may preferably be cationic or non-ionic. Preferably, the fabric softening compounds of the present invention are cationic.

Fabric conditioning compositions for use in accordance with the invention may be dilute or concentrated. Dilute products typically contain up to about 6 wt.% of the composition softening compounds, generally about 1 to 5 wt.%, whereas concentrated products may contain up to about 50 wt. % of the composition softening compounds, preferably from about 5 to about 50 wt. %, more preferably from 6 to 25 wt.%. Overall, the products of the invention may contain from 1 to 50 wt. %, preferably from 2 to 25 wt. % of the composition softening compounds, more preferably 2 to 20 wt. % of softening compounds.

The preferred softening compounds for use in fabric conditioner compositions of the invention are quaternary ammonium compounds (QAC). The QAC preferably comprises at least one chain derived from fatty acids, more preferably at least two chains derived from fatty acids. Generally, fatty acids are defined as aliphatic monocarboxylic acids having a chain of 4 to 28 carbons. Preferably the fatty acid chains are palm or tallow fatty acids. Preferably the fatty acid chains of the QAC comprise from 10 to 50 wt. % of saturated C18 chains and from 5 to 40 wt. % of monounsaturated C18 chains by weight of total fatty acid chains. In a further preferred embodiment, the fatty acid chains of the QAC comprise from 20 to 40 wt. %, preferably from 25 to 35 wt. % of saturated C18 chains and from 10 to 35 wt. %, preferably from 15 to 30 wt. % of monounsaturated C18 chains, by weight of total fatty acid chains.

The preferred quaternary ammonium fabric softening compounds for use in compositions of the present invention are so called "ester quats". Particularly preferred materials are the ester-linked triethanolamine (TEA) quaternary ammonium compounds comprising a mixture of mono-, di- and tri-ester linked components.

The composition of the invention delivered as fabric conditioning compositions may further comprise a nonionic surfactant. Typically these can be included for the purpose of stabilising the compositions. Suitable nonionic surfactants include addition products of ethylene oxide and/or propylene oxide with fatty alcohols, fatty acids and fatty amines.

Preferably the nonionic surfactant has an HLB of from about 7 to about 20, more preferably from 10 to 18, e.g. 12 to 16. Genapol^{™} C200 (Clariant) based on coco chain and 20 EO groups is an example of a suitable nonionic surfactant.

If present, the nonionic surfactant is present in an amount from 0.01 to 10 wt.%, more preferably 0.1 to 5 wt.%, based on the total weight of the composition. Thus, the fabric conditioning composition of the invention preferably comprises 0.1 to 5 wt% of a non-ionic surfactant preferably an fatty alcohol ethoxylate.

Co-softeners may be used in the fabric conditioning composition. When employed, they are typically present at from 0.1 to 20 wt.% and particularly at from 0.5 to 10 wt.%, based on the total weight of the composition. Preferred co-softeners include fatty esters, and fatty N-oxides. Fatty esters that may be employed include fatty monoesters, such as glycerol monostearate, fatty sugar esters, such as those disclosed WO 01/46361 (Unilever).

The compositions of the present invention may comprise a fatty complexing agent. Especially suitable fatty complexing agents include fatty alcohols and fatty acids. Of these, fatty alcohols are most preferred. Preferably the composition of the present invention comprises 0.5 to 20 wt.% perfume materials by weight of the composition, more preferably 1 to 15 wt.% perfume materials, most preferably 2 to 10 wt. % perfume materials.

The fabric conditioner composition is preferably in an aqueous form. The compositions preferably comprise from 75 to 95 wt.% water

The fabric conditioning composition may be used to treat fabrics either in a hand washing or a machine washing process. Preferably the fabric conditioner is used in the rinse stage of the washing process.

Preferably the clothes are treated with a 10 to 100 ml dose of fabric conditioner for a 4 to 7 kg load of clothes. More preferably, 10 to 80 ml for a 4 to 7 kg load of clothes.

### Liquid dishwash composition

The composition of the invention may be useful for upkeep of kitchen items e.g.. utensils and dishes which may be cleaned using a liquid dishwash compositions. The various ingredients other than the essential ingredients claimed in the present invention are summarized below. Among the various ingredients, anionic surfactants, non-ionic surfactants, and hydrotropes as detailed under liquid laundry detergent composition may be used in liquid dishwash composition. Additionally, other ingredients which may be included are detailed below:
Preferably, the composition further comprises an amphoteric surfactant. Preferably, an amphoteric surfactants is selected from include alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, alkylamphoglycinates, alkyl amidopropyl hydroxysultaines, acyl taurates and acyl glutamates, having alkyl radicals containing from about 8 to about 22 carbon atoms, the term "alkyl" being used to include the alkyl portion of higher acyl radicals. More preferably, an amphoteric surfactant selected from alkyl amidopropyl betaines, even more preferably cocoamidopropyl betaine. Amphoteric surfactant, when included, may be present in an amount ranging preferably from 0.1 to 5 wt%, more preferably from 0.1 to 4 wt%, even more preferably from 1 to 3 wt%. Mixtures of any of the above described materials may also be used. A good combination of surfactants for use in the present invention in the form of a dishwash composition is one having 1 to 30 wt% anionic surfactant and 0.1 to 5 wt% an amphoteric surfactant.

Liquid dishwash composition may preferably comprise an organic acid or its salts comprising citric acid or its salt. Preferably, the organic acid or its salt may further comprise succinic acid, malic acid, lactic acid, tartaric acid, hexanoic acid, cyclohexanoic acid, heptanoic acid, octanoic acid, 4-methyl octanoic acid, nonanoic acid, decanoic acid, benzoic acid, 4-methoxy benzoic acid and mixtures thereof. Examples of salts of organic acid include corresponding salts of these organic acids that are formed preferably with sodium and potassium, more preferably with sodium, e.g. trisodium citrate. More preferably, organic acid or its salt may further comprise maleic acid or its salt. Even more preferably, the organic acid or its salt is selected from citric acid or its salt e.g. trisodium citrate. Preferably, the composition does not comprise silver dihydrogen citrate.

The composition comprises an organic acid or its salts comprising citric acid or its salt from 0.2 to 5 wt%, preferably from 0.3 to 4 wt%, more preferably from 0.4 to 3 wt%, even more preferably from 0.5 to 3 wt%, further more preferably from 1 to 2 wt%.

Preferably, the liquid dishwash composition further comprises water in an amount ranging from 5 to 99 wt%, more preferably from 10 to 90 wt%, even more preferably from 15 to 80 wt%, further more preferably from 20 to 70 wt%, still more preferably from 30 to 65 wt%, yet more preferably from 35 to 60 wt%, yet further more preferably from 40 to 55 wt%.

Preferably, the liquid dishwash composition further comprises one or more sequestrants. Preferably, the composition comprises sequestrant may be present in an amount from 0.1 to 5 wt%, more preferably from 0.25 to 4 wt%, even more preferably from 0.5 to 2.5 wt%.

A preferred sequestrant is a phosphonic acid or a salt thereof. The phosphonic acid (or salt thereof) sequestrant is preferably selected from the group consisting of 1 -Hydroxyethylidene-1,1 -diphosphonic acid (HEDP; commercially available as Dequest(R) 2010), Diethylenetriaminepenta(methylenephosphonic acid) (DTPMP; commercially available as Dequest(R) 2066), Hexa methylene diamine tetra(methylenephosphonic acid) (HDTMP), Amino tris(methylenephosphonic acid) (ATMP), Ethylene diamine tetra(methylenephosphonic acid) (EDTMP), Tetra methylene diamine tetra(methylenephosphonic acid) (TDTMP); and Phosphono butane tricarboxylic acid (PBTC). The most preferred sequestrant is 1 -Hydroxyethylidene-1,1 - diphosphonic acid (HEDP). It is preferable that the sequestrant is added to the formulation in acid form.

Optionally, liquid dishwash composition further comprises an enzyme with or without a suitable enzyme stabilizer. Preferably the composition further comprises an effective amount of at least one enzyme with or without a suitable enzyme stabilizer. Examples of suitable enzymes include pectate lyase, protease, amylase, cellulase, lipase, mannanase; with or without an appropriate stabilizing agent.

Preferably, viscosity of the composition may suitably range from about 200 to about 10,000 mPa.s at 25°C at a shear rate of 21 sec⁻¹. This shear rate is the shear rate that is usually exerted on the liquid when poured from a bottle. Pourable liquid home care compositions generally have a viscosity of from 200 to 1,500 mPa.s, preferably from 100 to 800 mPa.s.

The liquid dishwash composition preferably has pH in the range from 2.0 to 8.0, preferably from 2.5 to 7.5, more preferably from 3.0 to 7.0, even more preferably from 3.5 to 7.0, further more preferably from 4.0 to 7.5, still more preferably from 4.5 to 7.5, yet more preferably from 5.0 to 7.5, still further more preferably from 5.5 to 7.5 and yet further more preferably from 6.0 to 6.5.

The liquid dishwash composition may further comprise one or more polymers. Preferably, polymers can be cationic, anionic, amphoteric or nonionic types with molecular weights higher than 100,000 Dalton. They are known to increase the viscosity and stability of liquid compositions, to enhance in-use and after-use skin sensory feels, and to enhance lather creaminess and lather stability. Examples of polymers include polyvinyl alcohol, polyacrylic acid, silane, siloxane and mixtures thereof. If present, polymers may be present in the composition in an amount ranging preferably from 0.001 to 10 wt%, more preferably from 0.1 to 6 wt%, still further more preferably from 1 to 3 wt%.

Preferably, the composition may be used as is, i.e. neat, or it may be diluted before use. The extent of dilution is generally dependent on market choice. In some markets a more concentrated product is desired while in others a more dilute product is preferred. When the composition is a liquid dishwash compositions it is typically diluted with water in a weight ratio in the range of 1:1 to 1:10.

The liquid dishwash composition may optionally comprise ingredients, such as fragrance, colorant, foam boosting agents, and odor absorbing materials.

### General purpose or toilet cleaners

The composition of the invention may be formulated as a general purpose cleaner which is usually used to clean floors (in which case it may be known as a floor cleaner) or used to clean toilets (in which case it may be known as a toilet cleaner). It may also be used to clean other hard surfaces like furniture, table tops, kitchen platforms and other surfaces in homes, offices, restaurants and other public places. Such compositions preferably include a cationic surfactant which in addition to providing cleaning benefit also ensure instant disinfection i.e killing or inactivation of germs.

Preferably, the cationic surfactant is a quaternary ammonium surfactant, preferably the quaternary ammonium surfactant is selected from one or more of alkyl dimethyl benzylammonium chloride (ADBAC) which is also known as benzalkonium chloride (BKC), bis (C8-C18) alkyl di methyl quaternary ammonium chloride preferably didecyl dimethyl ammonium chloride (DDAC), cetyl trimethyl ammonium chloride (CTAC), cetyl pyridinium chloride (CPC), cetrimonium bromide , benzethonium chloride (BZE); and dimethyldioctadecylammonium chloride. Preferred aspect of the invention provides for the cationic surfactant to be chosen from one or more of BKC or DDAC, preferably BKC.

The quaternary ammonium surfactants mentioned above, are available as a single quaternary ammonium compound, as well as mixtures of two or more different quaternary ammonium compounds e.g. under trademarks BARDAC^{™}, BARQUAT^{®} and HYAMINE^{®} (all by Lonza); and BTC^{®} (by Stepan). Quaternary ammonium compounds available as a single quaternary ammonium compound include didecyl dimethyl ammonium chloride (available as BARDAC^{™} 2250 R and BTC^{®} 1010, both 50% active; and BARDAC^{™} 2280 R and BTC^{®} 1010-80, both 80% active), alkyl dimethyl benzyl ammonium chloride (available as BARQUAT^{®} MB-50, BARQUAT^{®} MX-50, BARQUAT^{®} OJ-50, HYAMINE^{®} 3500, BTC^{®} 50, BTC^{®} 50E, BTC^{®} 65, BTC^{®} 776, BTC^{®} 824, BTC^{®} 835; each 50% active; and the same is available as BARQUAT^{®} MB-80, BARQUAT^{®} MX-80, HYAMINE^{®} 3500-80, BTC^{®} 8248, BTC^{®} 8358; each 80% active

The composition when formulated as a general purpose or toilet cleaner preferably comprises 0.1 to 3 wt%, more preferably 0.3 to 2 wt% cationic surfactant.

When the composition is formulated as a toilet cleaner, it may additionally comprise a bleach. The bleach may be a chlorine containing compound or a peroxide compound.

Ingredients like amphoteric surfactant and sequestrant may be included in the floor cleaner and toilet cleaner composition of the present invention. Details on the various types of the amphoteric surfactant and sequestrant are the same as given under the section on liquid dishwash composition. General purpose cleaners and toilet cleaners may be diluted before use. When diluted, they may be diluted with water in a weight ratio in the range of 1:10 to 1:1000.

The composition of the invention may also be delivered as a rim block. By a rim block is meant a shaped solid composition that is hung on to the rim of the toilet usually in a plastic cage like container so that every time the toilet is flushed, a quantity of water passes over the solid composition, eroding a part thereof before flushing into the toilet bowl. The toilet rim block preferably additionally includes a perfume to provide a lingering pleasant odour after every toilet flush.

The composition may optionally comprise other ingredients, such as fragrance and/or colour.

The composition of the invention is preferably used for home care applications. A "home care product" is a product for the treatment, cleaning, caring or conditioning of the home or any of its contents. The foregoing includes, but is not limited to, compositions, products, or combinations thereof relating to or having use or application in the treatment, cleaning, cleansing, caring or conditioning of surfaces, furniture and atmosphere of the home and household contents, such as clothes, fabrics and/or cloth fibres and the manufacture of all of the foregoing products.

Preferably, the composition used in the present invention is used to clean a hard surface, more preferably wherein the hard surface is a kitchen, bathroom or floor surface. Typically, such hard surfaces are surfaces that require frequent cleaning and preferably also sanitisation and/or disinfection. Such surfaces may be found in many household or industrial environments, and may include kitchen and bathroom surfaces, tabletops, floors, walls, windows, utensils, cutlery, and crockery. Such surfaces may be made from many different materials, including for instance plastics, wood, metal, ceramics, glass, concrete, marble, and painted surfaces. The composition may be applied to the surface by any suitable means known to the skilled person. For instance, a suitable means may be pouring, dropping, spraying or wiping in case of liquid compositions.

The composition may be used as is, i.e. neat, preferably the composition is diluted with water before use. For example, if applied in a diluted form, the composition is diluted with water preferably in a ratio 1:1000, more preferably 1:500, even more preferably 1:200 and further more preferably 1:100 which is substantially more diluted than a typical household cleaning composition e.g. a toilet cleaning composition, which tend to have dilutions e.g. 1:40 when used. Preferred dilution ranges are therefore 1:1 to 1:1000, preferably 1:1 to 1:500, more preferably 1:1 to 1:200.

In most hard surface cleaning application, the diluted solution is applied on to the desired surface by using a brush or a mop and allowing it to dry. In certain vertical surfaces, it may be sprayed on using a hand held spray pump. In certain cases, the compositions after it is applied on to the desired surface, may be wiped off to a substantially dry condition using a dry cloth or wipe. In toilet cleaning applications, the composition is generally applied on to the toilet bowl, allowed to stay thereon for a few minutes, and then the toilet is flushed, preferably after brushing with a toilet brush.

Another preferred embodiment of the invention relates to compositions according to the invention for use as or incorporation in industrial and/or institutional products. More preferably, this embodiment of the invention relates to a composition according to the invention which is an industrial and/or an institutional product. Industrial and institutional products are for example products being marketed under professional brands, with non-limiting examples being products for industrial, institutional, janitorial, and medical cleaning, cleaning-in-place, food services, veterinary, and agricultural products.

In another aspect, the present invention relates to a method of inhibiting the growth of fungus on a surface comprising the step of applying a composition of the invention on to a desired surface.

Typically, a fabric is washed by contacting it with a detergent composition either in neat or diluted form, rinsing the fabric one or more times e.g. two or three times with water; and finally, drying it. In the washing step, a fabric is cleaned by mechanically agitating it using hands and/or by using suitable cleaning means e.g. a brush, in so-called hand-wash method. Alternatively, in so-called machine-wash method, a fabric is cleaned by mechanical agitations carried out by a machine. In either case, a step of soaking a fabric, in a neat or diluted detergent composition, may be carried out for a desired duration e.g. 30 to 60 minutes. The step of drying may also be carried out by using machines; or simply by exposing the fabric to air.

Hard surfaces may be cleaned by applying the neat or diluted composition on to the desired surface and generally letting it dry. Alternately, in the case of toilet cleaning, the composition is applied and spread around with a brush and after a certain period of time, the toilet is flushed. Vertical surfaces are cleaned by spraying the composition on to the surface followed by wiping it clean with a dry cloth or mop.

The invention shall now be exemplified by the following non-limiting examples.

### Examples

### Examples A-E, 1: MIC of individual components and the antifungal efficacy of the combination at sub MIC levels

The following actives at the concentration indicated was tested for antifungal efficacy using the following procedure:
The antifungal assay was done using tissue culture flasks (T 25 cm²). 4 ml and 2 ml of sterile PDA (potato dextrose agar) were added to the bigger sides and smaller sides of the flasks respectively. The flasks were kept in a laminar air flow to let it solidify. 1 ml of the test formulations were added to the respective labelled flasks. 1 ml of distilled water was added to the control flask.

The flasks were rotated so that each side was rinsed with the formulation. Ideally the flask was kept in contact with the product on each side for 5 min. The flask was emptied by removing the formulation from the flasks.

*Aspergillus brasiliensis* was grown on Saboraud's dextrose agar (SDA) for 7 days at 30°C. The fungal spores were used for the study, where a homogenous suspension of the spores in 5 % Tween 80 was made. 1 ml of the fungal spore suspension (10⁴ spores/ml) was added to the flasks while spreading the suspension evenly. The flasks were rotated to let the fungal suspension contact each side of the flask for about 5 min.

The fungal suspension was removed from the flasks. The flasks were then incubated at 30° C for 7-10 days and the flasks were observed for growth of the fungal colonies daily.

The data is summarised in Table - 1

**Table -1**

| Example | Active (wt%) | Observation |
|---|---|---|
| A | Climbazole (0.022%) | Growth |
| B | Climbazole (0.028%) | No Growth |
| C | 4-Ethyl resorcinol (0.014%) | Growth |
| D | 4-Ethyl resorcinol (0.07%) | Growth |
| E | 4-Ethyl resorcinol (1.4%) | No Growth |
| 1 | Climbazole (0.014%) + 4-Ethyl resorcinol (0.014%) | No Growth |

The data in the table - 1 above indicates that the Minimum Inhibitory Concentration (MIC) of climbazole is 0.028% while the MIC of 4-ethyl resorcinol is 1.4%. Minimum inhibitory concentration refers to the lowest concentration of an antimicrobial that will inhibit the visible growth of a microorganism after incubation (Andrews J.M. 2001. Determination of minimum inhibitory concentrations. J. Antimicrob. Chemother. 48: 5-16).

By way of example -1, is shown that the combination of these two actives at a concentration below their respective MIC values ensures no growth of the tested fungus, thereby proving synergistic anti-fungal efficacy.

### Examples 2-3: Effect of the inclusion of a zinc salt (zinc acetate) on the antifungal efficacy.

The following compositions were tested for the antifungal efficacy using the same procedure as used in the examples carried out above in Table - 1. The data is summarized in Table - 2. The MIC of zinc acetate is 4%.

**Table - 2**

| Example | Active (wt%) | Observation |
|---|---|---|
| 2 | Climbazole (0.014%) + 4-ethyl resorcinol (0.007%) + zinc acetate (0.5%) | No Growth |
| 3 | Climbazole (0.022%) + 4-ethyl resorcinol (0.01%) + zinc acetate (0.75%) | No Growth |

The data in the table above indicates that with the inclusion of a zinc salt, it is possible to use even lower concentrations of ethyl resorcinol to achieve the desired anti-fungal efficacy.

## Claims

1. An antifungal composition comprising
(i) alkyl substituted dihydroxy benzene wherein the alkyl group comprises 2 to 6 carbon atoms;
(ii) a conazole compound;
(iii) a surfactant; and
(iv) 0.1 to 2 wt% zinc salt.

2. A composition as claimed in claim 1 wherein the alkyl substituted dihydroxy benzene compound is selected from one or more of 4-ethyl resorcinol, 4-butyl resorcinol or 4-hexyl resorcinol.

3. A composition as claimed in claims 1 or 2 comprising 0.005 to 4% by weight of the alkyl substituted dihydroxy benzene compound.

4. A composition as claimed in any one of the preceding claims wherein the conazole compound is selected from one or both of ketoconazole and climbazole.

5. A composition as claimed in any one of the preceding claims comprising 0.01 to 1 wt% conazole compound.

6. A composition as claimed in any one of the preceding claims wherein the zinc salt is selected from one or both of zinc chloride or zinc acetate.

7. The composition as claimed in any one of the preceding claims which is a laundry detergent composition comprising 1 to 80 wt% surfactant.

8. The composition as claimed in any one of the preceding claims 1 to 6 which is a fabric conditioning composition comprising 1 to 50 wt% of a fabric softening active.

9. The composition as claimed in any one of the preceding claims 1 to 6 which is a liquid dishwash composition comprising 1 to 30 wt% anionic surfactant and 0.1 to 5 wt% an amphoteric surfactant.

10. The composition as claimed in any one of the preceding claims 1 to 6 which is a general purpose or a toilet cleaning composition comprising 0.1 to 3 wt% of a cationic surfactant

11. A composition as claimed in claim 10 wherein the cationic surfactant is selected from one or more of alkyl dimethyl benzylammonium chloride(ADBAC),
alkyl diethyl benzylammonium chloride (ADEBAC), bis (C8-C18) alkyl di methyl quaternary ammonium chloride preferably didecyl dimethyl ammonium chloride (DDAC), cetyl trimethyl ammonium chloride (CTAC), cetyl pyridinium chloride (CPC), cetrimonium bromide , benzethonium chloride (BZE); and dimethyldioctadecylammonium chloride.

12. A composition as claimed in claim 11 wherein the cationic surfactant is ADBAC or DDAC.

13. A method of inhibiting growth of fungus on a surface comprising the step of applying a composition as claimed in any one of the preceding claims on to the desired surface.

## Patentansprüche

1. Antimykotische Zusammensetzung, umfassend
(i) alkylsubstituiertes Dihydroxybenzol, wobei die Alkylgruppe 2 bis 6 Kohlenstoffatome umfasst;
(ii) eine Conazol-Verbindung;
(iii) ein Tensid; und
(iv) 0,1 bis 2 Gew.-% Zinksalz.

2. Zusammensetzung, wie im Anspruch 1 beansprucht, wobei die alkylsubstituierte Dihydroxybenzolverbindung unter einer oder mehreren der folgenden Verbindungen ausgewählt ist: 4-Ethylresorcin, 2-Butylresorcin oder 4-Hexylresorcin.

3. Zusammensetzung, wie im Anspruch 1 oder 2 beansprucht, die 0,005 bis 4 Gew.-% der alkylsubstituierten Dihydroxybenzolverbindung umfasst.

4. Zusammensetzung, wie in irgendeinem der vorhergehenden Ansprüche beansprucht, wobei die Conazol-Verbindung unter Ketoconazol und/oder Climbazol ausgewählt ist.

5. Zusammensetzung, wie in irgendeinem der vorhergehenden Ansprüche beansprucht, die 0,01 bis 1 Gew.-% Conazol-Verbindung umfasst.

6. Zusammensetzung, wie in irgendeinem der vorhergehenden Ansprüche beansprucht, wobei das Zinksalz unter Zinkchlorid und/oder Zinkacetat ausgewählt ist.

7. Zusammensetzung, wie in irgendeinem der vorhergehenden Ansprüche beansprucht, die eine Waschmittelzusammensetzung ist, die 1 bis 80 Gew.-% Tensid umfasst.

8. Zusammensetzung wie in irgendeinem der vorhergehenden Ansprüche 1 bis 6 beansprucht, die eine Weichspülerzusammensetzung ist, die 1 bis 50 Gew.-% eines Weichspülerwirkstoffs umfasst.

9. Zusammensetzung, wie in irgendeinem der vorhergehenden Ansprüche 1 bis 6 beansprucht, die ein flüssiges Geschirrspülmittel ist, das 1 bis 30 Gew.-% anionisches Tensid und 0,1 bis 5 Gew.-% eines amphoteren Tensids umfasst.

10. Zusammensetzung, wie in irgendeinem der vorhergehenden Ansprüche 1 bis 6 beansprucht, die eine Allzweck- oder Toilettenreinigungszusammensetzung ist, die 0,1 bis 3 Gew.-% eines kationischen Tensids umfasst.

11. Zusammensetzung, wie im Anspruch 10 beansprucht, wobei das kationische Tensid unter einer oder mehreren der folgenden Verbindungen ausgewählt ist:
Alkyldimethylbenzylammoniumchlorid (ADBAC), Alkyldiethylbenzylammoniumchlorid (ADEBAC), Bis(C₈-C₁₈)-alkyldimethylquaternärem Ammoniumchlorid, vorzugsweise Didecyldimethylammoniumchlorid (DDAC), Cetyltrimethylammoniumchlorid (CTAC), Cetylpyridiniumchlorid (CPC), Cetrimoniumbromid, Benzethoniumchlorid (BZE) und Dimethyldioctadecylammoniumchlorid.

12. Zusammensetzung, wie im Anspruch 11 beansprucht, wobei das kationische Tensid ADBAC oder DDAC ist.

13. Verfahren zur Hemmung des Pilzwachstums auf einer Oberfläche, umfassend den Schritt des Aufbringens einer Zusammensetzung, wie in irgendeinem der vorhergehenden Ansprüche beansprucht, auf die gewünschte Oberfläche.

## Revendications

1. Composition antifongique comprenant :
(i) un dihydroxybenzène à substitution alkyle, dans lequel le groupe alkyle comprend 2 à 6 atomes de carbone ;
(ii) un composé de conazole ;
(iii) un tensioactif ; et
(iv) 0,1 à 2 % en poids d'un sel de zinc.

2. Composition selon la revendication 1, dans laquelle le composé de dihydroxybenzène à substitution alkyle est choisi entre un ou plusieurs parmi le 4-éthylrésorcinol, le 4-butylrésorcinol ou le 4-hexylrésorcinol.

3. Composition selon la revendication 1 ou 2, comprenant 0,005 à 4 % en poids du composé de dihydroxybenzène à substitution alkyle.

4. Composition selon l'une quelconque des revendications précédentes, dans laquelle le composé de conazole est choisi entre un ou les deux parmi le kétoconazole et le climbazole.

5. Composition selon l'une quelconque des revendications précédentes, comprenant 0,01 à 1 % en poids de composé de conazole.

6. Composition selon l'une quelconque des revendications précédentes, dans laquelle le sel de zinc est choisi entre un ou les deux parmi le chlorure de zinc ou l'acétate de zinc.

7. Composition selon l'une quelconque des revendications précédentes, qui est une composition détergente pour lessive comprenant 1 à 80 % en poids de tensioactif.

8. Composition selon l'une quelconque des revendications 1 à 6 précédentes, qui est une composition de conditionnement de tissu comprenant 1 à 50 % en poids d'un actif assouplissant textile.

9. Composition selon l'une quelconque des revendications 1 à 6 précédentes, qui est une composition liquide pour lavage de vaisselle comprenant 1 à 30 % en poids de tensioactif anionique et 0,1 à 5 % en poids d'un tensioactif amphotère.

10. Composition selon l'une quelconque des revendications 1 à 6 précédentes, qui est une composition de nettoyage universelle ou de nettoyage pour toilettes comprenant 0,1 à 3 % en poids d'un tensioactif cationique.

11. Composition selon la revendication 10, dans laquelle le tensioactif cationique est choisi entre un ou plusieurs parmi le chlorure d'alkyldiméthylbenzylammonium (ADBAC), le chlorure d'alkyldiéthylbenzylammonium (ADEBAC), le chlorure de bis(alkyle C₈-C₁₈)diméthylammonium quaternaire, de préférence le chlorure de didécyldiméthylammonium (DDAC), le chlorure de cétyltriméthyl-ammonium (CTAC), le chlorure de cétylpyridinium (CPC), le bromure de cétrimonium, le chlorure de benzéthonium (BZE) et le chlorure de diméthyldioctadécylammonium.

12. Composition selon la revendication 11, dans laquelle le tensioactif cationique est l'ADBAC ou le DDAC.

13. Procédé d'inhibition de la croissance de champignons sur une surface, comprenant l'étape consistant à appliquer sur la surface souhaitée une composition selon l'une quelconque des revendications précédentes.
